# EUROPÄISCHE PATENTSCHRIFT

(11) **EP 3 932 163 B1**
(45) Veröffentlichungstag und Bekanntmachung des Hinweises auf die Patenterteilung: **01.01.2025**
(21) Anmeldenummer: 21176275.2
(22) Anmeldetag: 27.05.2021
(51) Int. Cl.: A01B 69/00, A01B 69/04, A01D 41/02

(54) **SELBSTFAHRENDE LANDWIRTSCHAFTLICHE ARBEITSMASCHINE**
SELF-PROPELLED AGRICULTURAL MACHINE
MACHINE AGRICOLE AUTONOME

(30) Priorität: 02.07.2020 DE 102020117536
(43) Veröffentlichungstag der Anmeldung: 05.01.2022
(73) Patentinhaber: CLAAS Selbstfahrende Erntemaschinen GmbH, 33428 Harsewinkel (DE)
(72) Erfinder: Irmer, Daniel, 33442 Herzebock-Clarholz (DE); Spiekermann, Sebastian, 48346 Ostbevern (DE); Middelberg, René, 49080 Osnabrück (DE)
(74) Vertreter: CLAAS Gruppe

(56) Entgegenhaltungen:
- EP-A1- 3 300 561
- EP-B1- 2 316 259
- EP-B1- 2 983 010
- JP-A- 2020 022 397
- US-B2- 10 455 755

## Beschreibung

Die Erfindung betrifft eine selbstfahrende landwirtschaftliche Arbeitsmaschine mit einem Arbeitsorgan, das eine Arbeitsbreite quer zu einer Fahrtrichtung der Arbeitsmaschine aufweist und vorgesehen ist, um bei der Fahrt der Arbeitsmaschine einen Streifen einer landwirtschaftlichen Nutzfläche zu bearbeiten. Eine solche Arbeitsmaschine ist z.B. aus EP3300561 A1 bekannt.

Diese herkömmliche Arbeitsmaschine unterstützt einen Betriebsmodus, in welchem eine seitliche Kante des Arbeitsorgans an der Kante eines noch nicht bearbeiteten Teils der Nutzfläche entlanggeführt wird, so dass die Breite des bearbeiteten Streifens der Arbeitsbreite des Arbeitsorgans entspricht, sowie einen Betriebsmodus, in dem ein seitlicher Abschnitt des Arbeitsorgans einen bereits zuvor bearbeiteten Teil der Nutzfläche erneut überstreicht, so dass die Breite des bearbeiteten Streifens kleiner ist als die des Arbeitsorgans.

Der erstgenannte Betriebsmodus ist der effizientere; ein Grund, den zweiten Betriebsmodus zu verwenden, ergibt sich nur dann, wenn die Gesamtbreite der Nutzfläche kein ganzzahliges Vielfaches der Arbeitsbreite ist und das Bearbeiten der Fläche im ersten Betriebsmodus dazu führen würde, dass am Ende der Bearbeitung der letzte noch zu bearbeitende Streifen erheblich schmaler als die Nutzbreite wäre und ein Entlangführen der Kante des Arbeitsorgans an einer Kante dieses Streifens zu einer stark asymmetrischen Beanspruchung des Arbeitsorgans führen würde. Je nach Art des Arbeitswerkzeugs kann eine solche Asymmetrie als Gier-oder Wankmoment auf die Arbeitsmaschine auswirken, wodurch das exakte Verfolgen eines geplanten Weges erschwert wird. Auch die Arbeitsqualität des Arbeitsorgans kann durch die Asymmetrie beeinträchtigt werden. Um eine solche stark asymmetrische Beanspruchung bei der Bearbeitung des letzten Streifens zu vermeiden, wird in Kauf genommen, dass das Arbeitsorgan bei der Bearbeitung mehrerer Streifen in geringerem Umfang asymmetrisch beansprucht wird.

Ziel der vorliegenden Erfindung ist, eine asymmetrische Belastung wirksamer zu vermeiden.

Zu diesem Zweck wird vorgeschlagen, dass bei einer selbstfahrenden landwirtschaftlichen Arbeitsmaschine mit einem Arbeitsorgan, das eine Arbeitsbreite quer zu einer Fahrtrichtung der Arbeitsmaschine aufweist und vorgesehen ist, um bei der Fahrt der Arbeitsmaschine einen Streifen einer landwirtschaftlichen Nutzfläche zu bearbeiten, dessen Breite der Arbeitsbreite entspricht, einer Sensoranordnung zum Erkennen einer Kante zwischen einem bereits bearbeiteten Streifen der Nutzfläche oder einer nicht zu bearbeitenden Fläche einerseits und einem unbearbeiteten Teil der Nutzfläche andererseits, und einem Assistenzsystem zum Festlegen eines Fahrwegs der Arbeitsmaschine anhand der erkannten Kante das Assistenzsystem eingerichtet ist, mittels der Sensoranordnung zu erkennen, ob die Breite des unbearbeiteten Teils kleiner als die Arbeitsbreite ist und, wenn ja, den Fahrweg so festzulegen, dass das Arbeitsorgan beim Befahren des Fahrweges auf zwei Seiten über den unbearbeiteten Teil übersteht.

Um die Asymmetrie gegenüber dem oben beschriebenen herkömmlichen Fall zu vermindern, genügt jeglicher beidseitiger Überstand des Arbeitsorgans. Vorzugsweise sollte das Assistenzsystem eingerichtet sein, einen Überstand auf einer Seite des Arbeitsorgan zwischen der Hälfte und dem Doppelten des Überstandes auf der anderen Seite zu regeln; im Idealfall ist der Sollwert für den Überstand an einer Seite jeweils genauso groß wie auf der anderen.

Solange die Breite des unbearbeiteten Teils der landwirtschaftlichen Nutzfläche noch größer als die Arbeitsbreite ist, sollte das Assistenzsystem den Fahrweg so festlegen, dass eine Kante des Arbeitsorgans an der erkannten Kante entlangbewegt wird.

Um die nötigen Informationen über die Position einer Kante des noch unbearbeiteten Teils und ggf. dessen Breite zu erfassen, ist insbesondere ein LIDAR-Sensor geeignet.

Während das Arbeitsorgan meist austauschbar an der Arbeitsmaschine montiert ist, sollte die Sensoranordnung vorzugsweise unabhängig von dem Arbeitsorgan an der Arbeitsmaschine montiert sein, damit sie nicht jedes Mal mit dem Arbeitsorgan zusammen ausgetauscht werden muss und eventuelle Fehler bei der Montage nicht die Funktionssicherheit der Sensoranordnung beeinträchtigen können.

Vorzugsweise umfasst die Sensoranordnung einen auf einer Längsmittelebene der Arbeitsmaschine angeordneten Sensor. Durch diese Platzierung ist der Sensor in dem Fall, dass der zu bearbeitende Streifen schmaler als die Arbeitsbreite ist und die Arbeitsmaschine in Bezug auf den Streifen mittig platziert ist, von beiden Bestandskanten gleich weit entfernt, und durch Vergleichen ihrer jeweiligen Beiträge zum Signal des Sensors kann exakt festgestellt werden, ob und in welche Richtung die Position der Arbeitsmaschine vom geplanten Fahrweg abweicht.

Um die von der Arbeitsmaschine liegende Fläche ungehindert erfassen zu können, kann der Sensor insbesondere an oder auf einer Fahrerkabine angeordnet sein.

Weitere Merkmale und Vorteile der Erfindung ergeben sich aus der nachfolgenden Beschreibung von Ausführungsbeispielen unter Bezugnahme auf die beigefügten Figuren. Es zeigen:

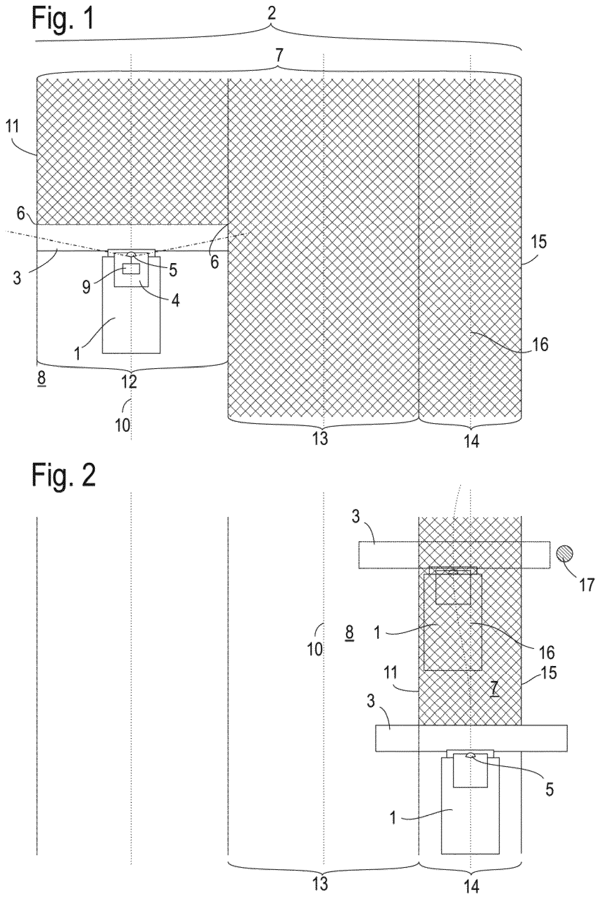

Fig. 1 bis 4 jeweils eine erfindungsgemäße Arbeitsmaschine in einer exemplarischen Anwendungssituation.

Fig. 1 zeigt in einer schematischen Draufsicht eine landwirtschaftliche Arbeitsmaschine 1 im Einsatz auf einer Nutzfläche 2. Die Arbeitsmaschine kann insbesondere ein Mähdrescher auf einem Getreidefeld mit einem Emtevorsatz als Arbeitsorgan 3 oder ein Feldhäcksler sein; grundsätzlich kommt aber jede Arbeitsmaschine in Betracht, bei der es toleriert werden kann, wenn ihr Arbeitsorgan einen Teil der Nutzfläche im Rahmen einer Bearbeitung mehrmals überstreicht.

Das Arbeitsorgan 3 ist an der Arbeitsmaschine 1 in fachüblicher Weise austauschbar montiert; es können zu der Arbeitsmaschine 1 verschiedene Modelle des Arbeitsorgans zur Verfügung stehen, die sich in ihrem Werkzeugbesatz in Anpassung an eine zu erntende Pflanzenart und in ihrer Breite unterscheiden.

Eine Sensoranordung 5 zum Erfassen der Umgebung der Arbeitsmaschine kann mehrere an verschiedenen Stellen der Arbeitsmaschine 1 und/oder des Arbeitsorgans 3 angebrachte Sensoren umfassen, die auf das Vorhandensein oder Fehlen von Pflanzenbestand in ihrer Umgebung ansprechen. Vorzugsweise umfasst die Sensoranordung 5 einen einzigen richtungsauflösenden Sensor, der an der Arbeitsmaschine so platziert ist, dass sein Erfassungsbereich seitliche vorderen Ecken 6 des Arbeitsorgans 3 zu einschließt. Um für den Pflanzenbestand an beiden Ecken 6 gleich empfindlich zu sein, ist der Sensor auf einer Längsmittelebene der Arbeitsmaschine 1 angeordnet, d.h. einer vertikalen Ebene, die mittig in Fahrtrichtung durch die Arbeitsmaschine 1 verläuft. Ein solcher Sensor kann z.B. am Dach einer Fahrerkabine 4 der Arbeitsmaschine 1 angebracht sein. Der Sensor kann insbesondere ein LIDAR-Sensor sein; generell kommt jeder an sich bekannte Sensortyp in Betracht, der geeignet ist, zu erfassen, ob und wo vor dem Arbeitsorgan 3 sich ein Pflanzenbestand befindet.

Eine Kreuzschraffur markiert einen Teil 7 der Nutzfläche 2, der noch nicht von der Arbeitsmaschine 1 bearbeitet ist. Ein bereits bearbeiteter Teil 8 ist weiß gelassen und nur zu einem kleinen Teil gezeigt. Ein Assistenzsystem 9 ist mit der Sensoranordnung 5 und einer Lenkung der Arbeitsmaschine 1 gekoppelt, um in einem ersten Betriebsmodus die Arbeitsmaschine 1 entlang eines Fahrwegs 10 zu führen, der durch die Anforderung definiert ist ist, dass sich eine der Ecken 6 exakt an einer Kante 11 zwischen bearbeitetem Teil 8 und unbearbeitetem Teil 7 entlangbewegen soll. So wird mit jeder Fahrt der Arbeitsmaschine 1 über die Nutzfläche 2 ein Streifen 12 bearbeitet, dessen Breite der Breite des Arbeitsorgans 3 entspricht.

Auf diese Weise sind im in Fig. 1 gezeigten Stadium bereits mehrere Streifen bearbeitet worden, die, jenseits des linken Rands der Figur liegend, nicht dargestellt sind. Die Breite des unbearbeiteten Teils 7 rechts von der Arbeitsmaschine reicht noch aus für einen Streifen 13 in der Breite des Arbeitsorgans und einen Streifen 14 von geringerer Breite.

Würde auch dieser Streifen 14 in dem oben definierten ersten Betriebsmodus bearbeitet, dann hätte dies zur Folge, dass nur ein linker Teil des Arbeitsorgans 3 mit Erntegut beaufschlagt würde, während der rechte Teil über eine Kante 15 der Nutzfläche 2 hinausragt und kein Erntegut zu fassen bekommt.

Um dies zu vermeiden, überwacht das Assistenzsystem 9 fortlaufend das Ausgangssignal der Sensoranordnung 5, und wechselt, wenn das Ausgangssignal anzeigt, dass jenseits beider Ecken 6 kein Pflanzenbestand vorhanden ist und die Breite eines Bestandes vor dem Arbeitsorgan 3 kleiner ist als die Breite des Arbeitsorgans 3, in einen zweiten Betriebsmodus, in dem es einen Fahrweg 16 so festlegt, dass, wie in Fig. 2 gezeigt, die Kanten des noch unbearbeiteten Teils 7 von beiden Kanten 6 des Arbeitsorgans 3 gleich weit entfernt sind.

Im in Fig. 2 gezeigten Fall, dass sich die Arbeitsmaschine Streifen für Streifen in einer Richtung über die Nutzfläche 2 vorarbeitet und somit eine der Kanten des unbearbeiteten Teils 7 mit deren Kante 15 zusammenfällt, kann sich die Notwendigkeit ergeben, von dem mittig zwischen den Kanten 11, 15 des unbearbeiteten Teils 7 verlaufenden Fahrweg 16 abzuweichen, wenn das Arbeitsorgan 3, wie in Fig. 2 anhand einer gestrichelten Kontur der Arbeitsmaschine 1 gezeigt, einem Hindernis 17 jenseits des Randes 15 ausweichen muss.

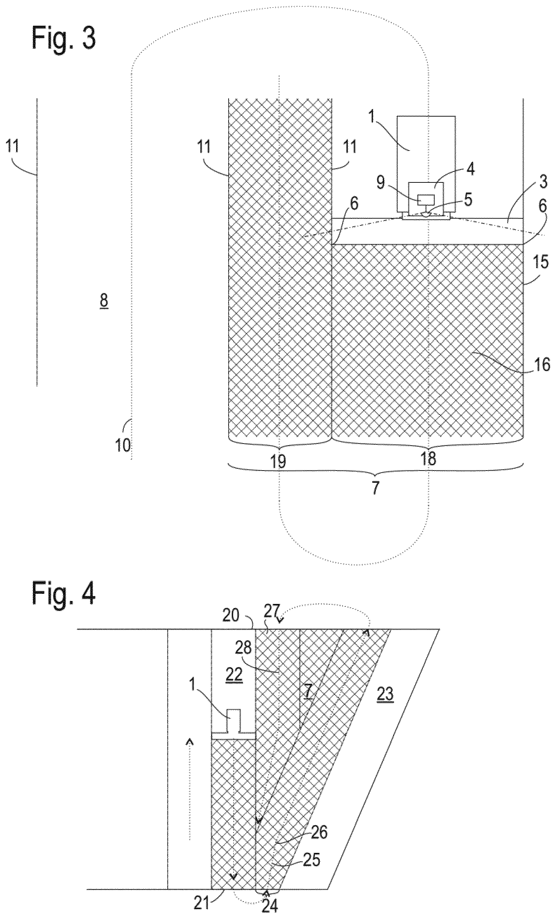

Dieses Problem kann vermieden werden, wenn der letzte zu bearbeitende Streifen 14 nicht an der Kante 15 der Nutzfläche 2 liegt. Wenn wie in Fig. 3 gezeigt der Streifen 18 an der Kante 15 der Nutzfläche nicht als letzter, sondern noch im ersten Betriebsmodus bearbeitet wird, während entfernt von der Kante 15 noch unbearbeiteter Teil 7 übrig ist, dann hat dieser Streifen 18 noch die Breite des Arbeitsorgans 3. Der als letztes übrigbleibende Streifen 19 von geringerer Breite ist dann auf beiden Seiten von bereits bearbeiteter und von Hindernissen freier Fläche 8 umgeben, so dass der Fahrweg 16 auf der gesamten Länge des Streifens 19 exakt durch dessen Mitte verlaufen kann.

Fig. 4 zeigt eine Anwendungssituation, bei der die Arbeitsmaschine auf einer Nutzfläche 2 eingesetzt wird, die eine schiefwinklig zu zwei einander gegenüberliegenden Kanten 20, 21 orientierte Kante 15 aufweist. Die Arbeitsmaschine 1 ist beim Bearbeiten eines Streifens 22 gezeigt, dessen Breite der Breite des Arbeitsorgans 3 entspricht. An die Kante 15 der Nutzfläche 2 kann außerdem bereits ein Streifen 23 derselben Breite bearbeitet sein, damit, wie im Falle der Fig. 3, der noch unbearbeitete Teil 7 bearbeitet werden kann, ohne dass dabei das Arbeitsorgan über die Kante 15 übersteht. Nach Bearbeitung des Streifens 22 wendet die Arbeitsmaschine 1 jenseits der Kante 21. Wenn sie wieder auf den noch unbearbeiteten Teil 7 zuhält, liegt vor ihr eine Front 24 an verbliebenem Pflanzenbestand, die schmaler ist als die Breite des Arbeitsorgans 3. Das Assistenzsystem 9 erkennt dies anhand der Ausgangssignale der Sensoranordnung 5 und wechselt in den zweiten Betriebsmodus, d.h. es steuert die Arbeitsmaschine 2 auf einem Fahrweg 25, der die Front 24 mittig kreuzt oder zumindest so gewählt ist, dass die Arbeitsmaschine einer Position zustrebt, in der dass das Arbeitsorgan 3 in Bezug auf den Pflanzenbestand symmetrisch platziert ist. Die Breite des Bestandes nimmt zu, wenn die Arbeitsmaschine 2 auf dem Fahrweg 25 vorrückt, und erreicht am Punkt 26 die Breite des Arbeitsorgans 3. Das Assistenzsystem 9 erkennt dies und wechselt daraufhin wieder in den ersten Betriebsmodus. Dies hat zur Folge, dass der Fahrweg 25 abknickt und einer Kante des unbearbeiteten Teils 7 folgt. Beim Bearbeiten eines nächsten Streifens 27 wechselt das Assistenzsystem 9,wie am eingezeichneten Fahrweg 28 zuerkennen, vom ersten Betriebsmodus zurück in den zweiten, sobald die Breite des zu bearbeitenden Bestands kleiner wird als die des noch zu bearbeitenden Bestands.

### Bezugszeichen

- 1: Arbeitsmaschine
- 2: Nutzfläche
- 3: Arbeitsorgan
- 4: Fahrerkabine
- 5: Sensoranordung
- 6: Ecke
- 7: unbearbeiteter Teil
- 8: bearbeiteter Teil
- 9: Assistenzsystem
- 10: Fahrweg
- 11: Kante
- 12: Streifen
- 13: Streifen
- 14: Streifen
- 15: Rand
- 16: Fahrweg
- 17: Hindernis
- 18: Streifen
- 19: Streifen
- 20: Kante
- 21: Kante
- 22: Streifen
- 23: Streifen
- 24: Front
- 25: Fahrweg
- 26: Punkt
- 27: Streifen
- 28: Fahrweg

## Patentansprüche

1. Selbstfahrende landwirtschaftliche Arbeitsmaschine (1) mit einem Arbeitsorgan (3), das eine Arbeitsbreite quer zu einer Fahrtrichtung der Arbeitsmaschine (1) aufweist und vorgesehen ist, um bei der Fahrt der Arbeitsmaschine (1) einen Streifen (12,13, 18) einer landwirtschaftlichen Nutzfläche (2) zu bearbeiten, dessen Breite der Arbeitsbreite entspricht, einer Sensoranordnung (5) zum Erkennen einer Kante (11, 15) zwischen einem bereits bearbeiteten Streifen der Nutzfläche (2) oder einer nicht zu bearbeitenden Fläche einerseits und einem unbearbeiteten Teil (7) der Nutzfläche (2) andererseits, und einem Assistenzsystem (9) zum Festlegen eines Fahrwegs (10, 16) der Arbeitsmaschine anhand der erkannten Kante (11, 15), **dadurch gekennzeichnet, dass** das Assistenzsystem (9) eingerichtet ist, mittels der Sensoranordnung (5) zu erkennen, ob die Breite des unbearbeiteten Teils (7) kleiner als die Arbeitsbreite ist und, wenn ja, den Fahrweg (16) so festzulegen, dass das Arbeitsorgan (3) beim Befahren des Fahrweges (16) auf zwei Seiten über den unbearbeiteten Teil (7) übersteht.

2. Selbstfahrende landwirtschaftliche Arbeitsmaschine nach Anspruch 1, **dadurch gekennzeichnet, dass** das Assistenzsystem (9) eingerichtet ist, einen Überstand auf einer Seite des Arbeitsorgans (3) zwischen der Hälfte und dem Doppelten des Überstandes auf der anderen Seite zu regeln.

3. Selbstfahrende landwirtschaftliche Arbeitsmaschine nach Anspruch 1 oder 2, **dadurch gekennzeichnet, dass** das Assistenzsystem (9) eingerichtet ist, den Überstand auf beiden Seiten des Arbeitsorgans (3) auf einen gleichen Wert zu regeln.

4. Selbstfahrende landwirtschaftliche Arbeitsmaschine nach Anspruch 1 oder 2, **dadurch gekennzeichnet, dass** das Assistenzsystem (9) eingerichtet ist, wenn die Breite des unbearbeiteten Teils (7) größer als die Arbeitsbreite ist, den Fahrweg (10) so festzulegen, dass eine Ecke (6) des Arbeitsorgans (3) an der erkannten Kante (11, 15) entlangbewegt wird.

5. Selbstfahrende landwirtschaftliche Arbeitsmaschine nach einem der vorhergehenden Ansprüche, **dadurch gekennzeichnet, dass** die Sensoranordnung (5) einen LIDAR-Sensor umfasst.

6. Selbstfahrende landwirtschaftliche Arbeitsmaschine nach einem der vorhergehenden Ansprüche, **dadurch gekennzeichnet, dass** das Arbeitsorgan (3) austauschbar an der Arbeitsmaschine (1) montiert ist und die Sensoranordnung (5) unabhängig von dem Arbeitsorgan (3) an der Arbeitsmaschine (1) montiert ist.

7. Selbstfahrende landwirtschaftliche Arbeitsmaschine nach einem der vorhergehenden Ansprüche, **dadurch gekennzeichnet, dass** die Sensoranordnung (5) einen auf einer Längsmittelebene der Arbeitsmaschine (1) angeordneten Sensor umfasst.

8. Selbstfahrende landwirtschaftliche Arbeitsmaschine nach einem der vorhergehenden Ansprüche, **dadurch gekennzeichnet, dass** die Sensoranordnung (5) einen an oder auf einer Fahrerkabine (4) angeordneten Sensor umfasst.

## Claims

1. A self-propelled agricultural working machine (1) with a working unit (3) which has a working width transverse to a direction of travel of the working machine (1) and is intended, during the travel of the working machine (1), to process a strip (12, 13, 18) of an agriculturally usable area (2) the width of which corresponds to the working width, with a sensor assembly (5) for detecting an edge (11, 15) between, on the one hand, a strip of the usable area (2) which has already been processed or an area which is not to be processed, and on the other hand, an unprocessed portion (7) of the usable area (2), and with an assistance system (9) for defining a travel route (10, 16) for the working machine with the aid of the detected edge (11, 15), **characterized in that** the assistance system (9) is configured to detect, by means of the sensor assembly (5), whether the width of the unprocessed portion (7) is smaller than the working width and, if this is the case, to define the travel route (16) in a manner such that during navigation of the travel route (16), the working unit (3) projects over the unprocessed portion (7) on two sides.

2. The self-propelled agricultural working machine according to claim 1, **characterized in that** the assistance system (9) is configured to regulate a projection on one side of the working unit (3) to between half and twice the projection on the other side.

3. The self-propelled agricultural working machine according to claim 1 or claim 2, **characterized in that** the assistance system (9) is configured to regulate the projection on both sides of the working unit (3) to an identical value.

4. The self-propelled agricultural working machine according to claim 1 or claim 2, **characterized in that** the assistance system (9) is configured such that if the width of the unprocessed portion (7) is larger than the working width, the travel route (10) is defined in a manner such that a corner (6) of the working unit (3) is moved along the detected edge (11, 15).

5. The self-propelled agricultural working machine according to one of the preceding claims, **characterized in that** the sensor assembly (5) comprises a LIDAR sensor.

6. The self-propelled agricultural working machine according to one of the preceding claims, **characterized in that** the working unit (3) is interchangeably mounted on the working machine (1) and the sensor assembly (5) is mounted on the working machine (1) independently of the working unit (3).

7. The self-propelled agricultural working machine according to one of the preceding claims, **characterized in that** the sensor assembly (5) comprises a sensor disposed on a longitudinal median plane of the working machine (1).

8. The self-propelled agricultural working machine according to one of the preceding claims, **characterized in that** the sensor assembly (5) comprises a sensor disposed at or on a driver's cab.

## Revendications

1. Machine agricole (1) automotrice, comprenant un organe de travail (3) qui présente une largeur de travail perpendiculaire à une direction de déplacement de la machine (1) et est prévu pour traiter, au cours du déplacement de la machine (1), une bande (12, 13, 18) d'une surface utile agricole (2) dont la largeur correspond à la largeur de travail, comprenant un dispositif de capteur (5) destiné à détecter un bord (11, 15) entre une bande déjà traitée de la surface utile (2) ou une surface ne devant pas être traitée, d'une part, et une partie non traitée (7) de la surface utile (2), d'autre part, et comprenant un système d'assistance (9) destiné à définir un trajet de déplacement (10, 16) de la machine, à l'aide du bord (11, 15) détecté, **caractérisée en ce que** le système d'assistance (9) est conçu pour détecter à l'aide du dispositif de capteur (5) si la largeur de la partie non traitée (7) est inférieure à la largeur de travail et, si oui, pour définir le trajet de déplacement (16) de manière à ce que, lors de l'exécution du trajet de déplacement (16), l'organe de travail (3) dépasse sur deux côtés de la partie non traitée (7).

2. Machine agricole automotrice selon la revendication 1, **caractérisée en ce que** le système d'assistance (9) est conçu pour régler le dépassement sur un côté de l'organe de travail (3) entre la moitié et le double du dépassement sur l'autre côté.

3. Machine agricole automotrice selon la revendication 1 ou 2, **caractérisée en ce que** le système d'assistance (9) est conçu pour régler le dépassement sur les deux côtés de l'organe de travail (3) à une même valeur.

4. Machine agricole automotrice selon la revendication 1 ou 2, **caractérisée en ce que** le système d'assistance (9) est conçu pour définir le trajet de déplacement (10) de manière à ce qu'un angle (6) de l'organe de travail (3) soit déplacé le long du bord (11, 15) détecté, lorsque la largeur de la partie non traitée (7) est supérieure à la largeur de travail.

5. Machine agricole automotrice selon une des revendications précédentes, **caractérisée en ce que** le dispositif de capteur (5) comprend un capteur LIDAR.

6. Machine agricole automotrice selon une des revendications précédentes, **caractérisée en ce que** l'organe de travail (3) est monté de façon interchangeable sur la machine (1), et le dispositif de capteur (5) est monté sur la machine (1) indépendamment de l'organe de travail (3).

7. Machine agricole automotrice selon une des revendications précédentes, **caractérisée en ce que** le dispositif de capteur (5) comprend un capteur qui est placé sur un plan médian longitudinal de la machine (1).

8. Machine agricole automotrice selon une des revendications précédentes, **caractérisée en ce que** le dispositif de capteur (5) comprend un capteur qui est placé sur une cabine de conducteur (4) ou sur le dessus de celle-ci.
